(19) Europäisches Patentamt

European Patent Office

Office européen des brevets

(11)  EP 4 553 769 B1

(12)  **EUROPEAN PATENT SPECIFICATION**

(45) Date of publication and mention
of the grant of the patent:
**15.07.2026  Bulletin 2026/29**

(21) Application number: **23208820.3**

(22) Date of filing: **09.11.2023**

(51) International Patent Classification (IPC):
**G06T 7/68** *(2017.01)*      **G06T 7/73** *(2017.01)*

(52) Cooperative Patent Classification (CPC):
**G06T 7/73; G06T 7/68**

(54)  **METHOD FOR POSITIONING A DRILL BIT FOR DRILLING THROUGH A GEOMETRIC CENTROID OF AN IRREGULAR SHAPE AND MULTI-SHADE RAW GEMSTONE**

VERFAHREN ZUR POSITIONIERUNG EINES BOHRMEISSELS ZUM BOHREN DURCH EINEN GEOMETRISCHEN SCHWERPUNKT EINER UNREGELMÄSSIGEN FORM UND ROHER MEHRSCHIRM-EDELSTEIN

PROCÉDÉ DE POSITIONNEMENT D'UN TRÉPAN POUR FORER À TRAVERS UN CENTROÏDE GÉOMÉTRIQUE D'UNE PIERRE PRÉCIEUSE BRUTE DE FORME IRRÉGULIÈRE ET À TEINTES MULTIPLES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**14.05.2025  Bulletin 2025/20**

(73) Proprietor: **Klaipedos Universitetas**
**92294 Klaipeda (LT)**

(72) Inventors:
• **Drungilas, Darius**
**Slengiai, Klaipedos raj. (LT)**
• **Lukosius, Zydrunas**
**Dercekliu km., Klaipedos raj. (LT)**
• **Kurmis, Mindaugas**
**Kiskenu km., Klaipedos raj. (LT)**

(74) Representative: **AAA Law**
**A. Gostauto 40B**
**03163 Vilnius (LT)**

(56) References cited:
**CN-A- 113 210 895**

• AMINA GAHRAMANOVA: "Locating Centers of Mass with Image Processing", UNDERGRADUATE JOURNAL OF MATHEMATICAL MODELING: ONE + TWO, vol. 10, no. 1, May 2019 (2019-05-01), XP093152669, ISSN: 2326-3652, DOI: 10.5038/ 2326-3652.10.1.4906

• LU HUAFENG ET AL: "Target Recognition and Automatic Drilling Control for A Tunnel Drilling Robot", 2023 42ND CHINESE CONTROL CONFERENCE (CCC), TECHNICAL COMMITTEE ON CONTROL THEORY, CHINESE ASSOCIATION OF AUTOMATION, 24 July 2023 (2023-07-24), pages 1 - 6, XP034424376, DOI: 10.23919/ CCC58697.2023.10241236

**Description**

TECHNICAL FIELD

The invention relates methods for drilling holes in gemstones and in particular methods for drilling holes through geometric centroid of an irregular shape and multi-shade gemstone.

BACKGROUND ART

Natural gemstones found in nature have an irregular shape and multicolour and/or multi-shade structure. Due to irregular shape and multi-shade structure automatization of drilling holes through geometrical centre requires manual or semi-manual and skilled labour for drilling raw gemstones.

Common raw gemstone drilling machines are manually operated for drilling raw gemstones one by one and require a skilled operator to set the stone for most optimal drilling trajectory.

A US patent publication No.: US4076007 discloses a depressed drill assembly and vibratory work piece support for abrasive cutting in a zone immersed in liquid with or without abrasive grit, wherein vertically disposed excursions aligned with the gravitational axis of the drill assembly intermittently lifts the latter for access and entry of said grit and/or liquid into the cutting zone intermediate the drill and work piece, whereby holes are accurately cut through gemstones and the like.

Main drawback of such machines and methods of drilling is that trajectory for drilling is essentially random resulting in off-centre through hole in a stone.

A CN patent application publication No.: CN 113 210 895 A discloses a method and device for gemstone drilling which involves capturing an image of the gemstone, processing the image to determine drilling point information, and controlling a processing device based on this information. However, it does not detail the specific image processing steps of the present invention, such as the use of Otsu's binarization followed by specific refinement and centroid calculation on the resulting binary image, particularly for handling irregular and multi-shaded stones.

A method for locating a geometric centroid of a rigid body with image processing is disclosed in Gahramanova, Amina. (2019). Locating Centers of Mass with Image Processing. Undergraduate Journal of Mathematical Modeling: One + Two. 10. 10.5038/2326-3652.10.1.4906. The paper shows how to devise a fast and convenient way of locating the centroid of planar objects of different shapes. A Python-based program implemented computer vision technique is used to scan through images depicting different objects and locate their centroids. For geometric bodies, the results produced by the program are aligned with those predicted by integral calculations. Moreover, the program is also able to successfully mark the centroids of arbitrary shapes, meaning that it is applicable to any possible planar object. Main disadvantage is location of center of an image of 2D object only.

Publication AMINA GAHRAMANOVA: "Locating Centers of Mass with the Image Processing ", Undergraduate Journal of Mathematical Modeling: One+Two, vol. 10, no.1, May 2019, XP093152669 teaches centroid calculation from images and focuses on general planar objects and does not address the specific challenges of segmenting raw, irregular, multi-shade 3D gemstones within a drilling apparatus, nor the integration with CNC control including coordinate transformation as required for practical implementation.

Paper Mcmanus, Ian & Stöver, Katharina & Kim, Do. (2011). Arnheim's Gestalt Theory of Visual Balance: Examining the Compositional Structure of Art Photographs and Abstract Images. i-Perception. 2. 615-47. 10.1068/i0445aap. discloses physicalist interpretation of Rudolf Arnheim's a Gestalt theory of visual composition, calculating an image's centre of mass (CoM). Three types of data are used: a large, representative collection of art photographs of recognised quality; cropping by experts and non-experts of photographs; and Ross and Arnheim's procedure of placing a frame around objects such as Arnheim's two black disks. Main disadvantage is location of centre of an image of 2D object only.

German patent publication No.: DE10157958 discloses an image processing method and apparatus. In the method, after a variable-density image of a target object is inputted and edge pixels representing the contour line of the target object are extracted from the image, the directions of these edge pixels are calculated, while straight-line portions in the contour are labelled according to their directions. Those of the edge pixels, which have the same direction as that of any of the straight-line portions, are assigned the same label. Line segments are then extracted as assemblies of those of the edge pixels which are continuous on the image and have a same assigned label. For labelling the directions of the straight-line portions, a histogram may be prepared, based on the numbers of edge pixels having different directions. Peaks are then extracted from the histogram and the labels are set to the directions corresponding to these peaks. Main drawback of the method is that it is not suitable for determining geometric of irregularly shaped multicolour/multi-shade 3D objects.

Known methods of processing raw gemstones are disclosed in Sinkevicius, S.; Lipnickas, A.; Rimkus, K. Automatic Amber Gemstones Identification by Color and Shape Visual Properties. Eng. Appl. Artif. Intell. 2015, 37, 258-267; Sinkevicius, S.; Lipnickas, A.; Rimkus, K. Amber Gemstones Sorting By Colour. Elektron. Ir Elektrotechnika 2017, 23, 10-14.]. The methods only employ automated sorting of raw amber stones based on statistical analyses of colours.

Publication Lu et al., "Target Recognition and Automatic Drilling Control for A Tunnel Drilling Robot", 2024 42nd Chinese Control Conference (CCC), Technical Committee on Control Theory, Chinese Association of Automation, 24 July 2023, pages 1-6, XP034424376 discusses target recognition for drilling robots in a different context (tunneling). While involving image processing and drilling control, the methods and objectives differ significantly from the precise centroid drilling of small, irregular gemstones.

The present invention is dedicated to overcoming of the above shortcomings and for producing further advantages over prior art.

## BRIEF DESCRIPTION OF THE INVENTION

The invention is a method for position a drill bit for drilling through geometric centroid of a multi-shade raw gemstone having an irregular shape. The method comprises capturing an image of a drilling zone with a gemstone positioned thereat and transmits it to image processing unit comprising image processing software supplemented with artificial intelligence functionality for image scanning, processing, segmentation, coordinate determination and assignment of drilling point. The determined coordinates are transmitted to a control unit of coordinate CNC drilling unit.

## BRIEF DESCRIPTION OF THE DRAWINGS

Features of the invention believed to be novel and inventive are set forth with particularity in the appended claims. The invention itself, however, may be best understood by reference to the following detailed description of the invention, which describes exemplary embodiments, given in non-restrictive examples, of the invention, taken in conjunction with the accompanying drawing, in which:

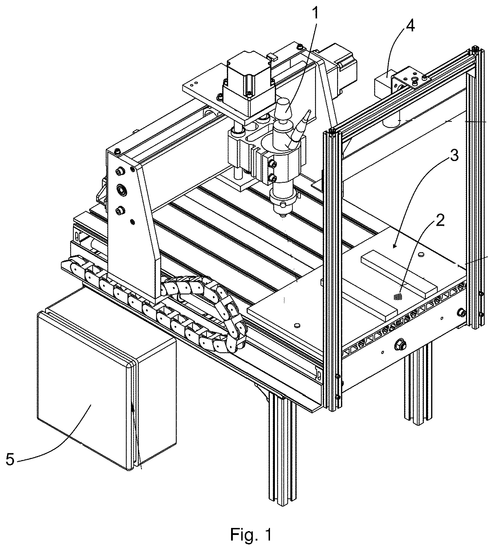

Fig. 1 shows system for drilling through a geometrical centroid of an irregular shape multi-shade raw gemstone.

Preferred embodiments of the invention will be described herein below with reference to the drawing.

## DETAILED DESCRIPTION OF THE INVENTION

It should be understood that numerous specific details are presented in order to provide a complete and comprehensible description of the invention embodiment. However, the person skilled in art will understand that the embodiment examples do not limit the application of the invention which can be implemented without these specific instructions. Well-known methods, procedures and components have not been described in detail for the embodiment to avoid misleading. Furthermore, this description should not be considered to be constraining the invention to given embodiment examples but only as one of possible implementations of the invention.

Method for position a drill bit (1) for drilling through geometric centroid of a multi-shade raw gemstone (2) having an irregular shape comprises: capturing an image of a drilling zone (3) with a gemstone (2) placed therein using a video camera (4); processing the captured image by an image processing software running in the image processing unit (not shown in the drawing):

a) Filtering the captured image: converting the captured image from RGB (i.e. red, green, blue) to grey scale; performing image filtering comprising smoothing to reduce image noise and sharpening transitions by averaging pixel values within a local neighbourhood, and potentially extracting colour components.

b) Defining a Region of Interest (ROI): defining the field of view of the video camera (4) by specifying coordinates of a region of interest (ROI) in the captured image, corresponding to the designated working area (3) where the gemstone (2) is placed for processing.

c) Segmenting the gemstone: separating the gemstone (2) image from the general background of the drilling zone (3) within the ROI by applying Otsu's binarization algorithm for obtaining a binary image. This involves: 1) computing a histogram of the obtained grayscale image within the ROI; 2) normalizing the histogram; 3) calculating class probabilities and means for different threshold values; 4) computing intraclass and interclass variances; 5) selecting the threshold that maximizes interclass variance; 6) applying the selected threshold to create the binary image. The binarization operation automatically determines an optimal threshold value, effectively separating foreground objects (gemstones) from the background (drilling zone surface). In the resulting binary image, the gemstone (2) is represented by white pixels (Pixel Value = 1), while the background is represented by black pixels (Pixel Value = 0).

d) Refining the binary image: subjecting the binary image area representing the gemstone (2) to further processing steps comprising contour detection and edge enhancement.

e) Calculating the geometric centroid: calculating the geometric centroid $(X_c, Y_c)$ of the detected gemstone (2) based on the refined binary image using a Centroid function, according to the formula:

$$Xc = Sum(X * Pixel\ Value) / Sum(Pixel\ Value)$$

$$Yc = Sum(Y * Pixel\ Value) / Sum(Pixel\ Value)$$

where the summation is performed over all pixels (X, Y) within the refined binary image area representing the gemstone, X and Y represent the pixel coordinates, and Pixel Value is the numeric binary value (1 for gemstone pixels, 0 for background pixels, though effectively only pixels with value 1 contribute to the sum). In this way the coordinates of the geometric centroid (Xc, Yc) in the image coordinate system are determined.

f) Transforming coordinates: transforming the calculated geometric centroid coordinates (Xc, Yc) from the image coordinate system into the coordinate system used by the numerical control (CNC) controller (5). This coordinate transformation is necessary to precisely position and control the drill (1) and comprises steps such as:

1. Distortion correction;
2. Perspective projection;
3. Rotation and Translation;
4. Scaling and Offset.

These transformation steps are performed in a computer device by the image processing software.

g) Generating control commands: generating G-code commands based on the transformed geometric centroid coordinates and sending the G-code commands to the CNC controller (5) controlling the drill bit (1).

The image processing unit comprises image processing software implementing the steps described above, supplemented with artificial intelligence functionality for image scanning, processing, segmentation, coordinate determination and assignment of drilling point.

An image of a raw gemstone (2) in visual field of the image capturing unit (4) is captured by the video camera (4) after an external trigger (not shown in the drawings), i.e. a sensor, detects a placed gemstone (2) on the drilling zone (3). The captured image is transmitted to the image processing unit realised in a computer device, such as general-purpose desktop computer or alike, running the image processing software. The image processing software performs image filtering comprising smoothing to reduce image noise and sharpen transitions by averaging pixel values within a local neighbourhood and extracting colour components comprising extraction and analysis of individual colour components present in the image, typically in a colour space such as RGB (Red, Green, Blue) and converting the image into grayscale. Such image filtering reduces noise and enhance quality of the captured image and due to increased image quality facilitate accurate recognition of the gemstones (2). The analysed video camera (4) field is defined by specifying coordinates of region of interest (ROI) in the captured image, corresponding to the designated working area (3) where gem is placed for processing. The image is segmented by performing Otsu's binarization operations where the following steps are involved: 1) computing histogram of the obtained grayscale image; 2) normalizing the histogram; 3) calculating class probabilities and means for different threshold values; 4) computing intraclass and interclass variances; 5) selecting the threshold that maximizes interclass variance; 6) applying the selected threshold to create a binary image. The binarization operations automatically determine an optimal threshold value, maximizing interclass variance, effectively separating foreground objects, such as gemstones (2) from the background, i.e. surface of the drilling zone (3). In a resulting binary image, foreground objects such as object placed in the working (ROI) area, i.e. the gemstones (2), are represented by white pixels (value 1), while the background is represented by black pixels (value 0). The binary image area representing the gemstone (2) is subjected to further processing steps such as contour detection and edge enhancement, enabling accurate identification and differentiation within the segmented image. Edge enhancement allows to refine the detection of gemstone contours and thus extract foreground object (gemstone) which is fed into Centroid function. Centroid function is subsequently used to calculate and retrieve the geometric centroid coordinates (Xc, Yc) of the gemstone (2) within the binary image. The geometric centroid of the gemstone (2) is calculated, according to formula [1]:

$$Xc=Sum(X*Pixel\ Value)/Sum(Pixel\ Value),\ Yc=Sum(Y*Pixel\ Value)/Sum(Pixel\ Value)\ [1]$$

where X and Y represent pixel coordinates, and Pixel Value is a numeric binary value, which is 0 or 1, of each pixel, where 0 represent black pixel and 1 represents white pixel. In this way the coordinates of geometric centroid on captured image of any shaped object within the analysed field are determined.

In order to precisely position and control the drill (1) into the geometric centroid of the irregularly shaped gemstone (2), the coordinates of geometric centroid associated with the captured image are transformed into coordinate system of the CNC controller (5). The coordinate transformation involves the following steps:

1. Distortion correction;
2. Perspective projection;
3. Rotation and Translation;
4. Scaling and Offset;

These steps are performed in a computer device by image processing software. Positioning of the drill (1) is performed using G-code commands, which are generated using the transformed coordinates of the gemstone geometric centroid and formed into text strings of G-code commands before being sent to the CNC controller (5) of the drilling unit. System for drilling through a geometrical centroid of an irregular shape multi-shade raw gemstone (2) comprises a video camera (4), gemstone process synchronization logic controller (9), gemstone drilling zone (3), a computer device running an image processing software for image scanning, processing, coordinate determination and tasking CNC drilling system control unit (5).

Example of implementation of method according to the invention.

A captured image of drilling zone (3) has length of 120mm, width of 60mm and height of 305mm. Diameter at widest part of a gemstone (2) is from 5mm to 25 mm.
Resolution of the captured image is - 2048 x 1536 px. Focal length of the image capturing device lens is 16mm, diaphragm max value - 1:1.4.
The gemstone (2) is drilled in 5-10 seconds which would amount to 8640 - 172800 processed objects in 24 hours with accuracy of +- 0,1mm.
Although numerous characteristics and advantages together with structural details and features have been listed in the present description of the invention, the description is provided as an example fulfilment of the invention. Without departing from the principles of the invention, there may be changes in the details, especially in the form, size and layout, in accordance with the scope of the invention as defined by the appended set of claims.

**Claims**

1.  A method for positioning a drill bit for drilling through a geometric centroid of a multi-shade raw gemstone having an irregular shape comprises capturing an image of a drilling zone with a gemstone positioned therein using a video camera, processing the captured image by an image processing software running in the image processing unit, obtaining coordinates of the gemstone in the processed image and using the obtained coordinates by a numerical control controller for controlling the drilling bit for drilling through geometric centroid of the a raw gemstone **characterised in that**

    the captured image is filtered in the image processing software, where the filtering comprises smoothing the image to reduce image noise and sharpen transitions by averaging pixel values within a local neighbourhood, and extracting colour components comprising extraction and analysis of individual colour components present in the image, and converting the image into grayscale;
    the video camera (4) field is defined by specifying coordinates of region of interest (ROI) in the captured image, corresponding to the designated working area (3) where gemstone (2) is placed for processing;
    the image is segmented by performing Otsu's binarization operations comprising computing histogram of the obtained grayscale image, normalizing the histogram, calculating class probabilities and means for different threshold values, computing intraclass and interclass variances, selecting threshold that maximizes interclass variance, applying the selected threshold to create a binary image, where the binarization operations automatically determine an optimal threshold value for separating from surface of the drilling zone (3), where gemstones (2) placed in the working (ROI) area are represented by white pixels (value 1), while the background is represented by black pixels (value 0) in the resulting binary image;
    the binary image area representing the gemstone (2) is subjected to further processing steps comprising contour detection and edge enhancement;
    the geometric centroid coordinates (Xc, Yc) of the gemstone (2) within the binary image are calculated using a centroid function:

**EP 4 553 769 B1**

$$Xc=Sum(X*Pixel\ Value)/Sum(Pixel\ Value),\ Yc=Sum(Y*Pixel\ Value)/Sum(Pixel\ Value)\ [1]$$

where X and Y represent pixel coordinates, and Pixel Value is a numeric binary value, which is 0 or 1, of each pixel, where 0 represent black pixel and 1 represents white pixel,
transforming the coordinates of the geometric centroid (Xc, Yc) of the irregularly shaped gemstone into the coordinate system of the CNC controller,
wherein the geometric centroid (Xc, Yc) coordinate transformation comprises distortion correction, perspective projection, rotation and translation, scaling and offset;

positioning of the drill (1) is performed using G-code commands, which are respectively generated using the recalculated coordinates of the gemstone geometric centroid and forming text strings of G-code commands and sending the G-code commands to drilling unit.

**Patentansprüche**

1. Verfahren zum Positionieren eines Bohreinsatzes zum Bohren durch einen geometrischen Schwerpunkt eines mehrfarbigen Rohedelsteins, der eine unregelmäßige Form aufweist, umfassend Erfassen eines Bildes einer Bohrzone mit einem darin positionierten Edelstein unter Verwendung einer Videokamera, Verarbeiten des erfassten Bildes durch eine Bildverarbeitungssoftware, die in der Bildverarbeitungseinheit ausgeführt wird, Erlangen von Koordinaten des Edelsteins in dem verarbeiteten Bild und Verwenden der erlangten Koordinaten durch eine Steuerung für numerisches Steuern zum Steuern des Bohreinsatzes zum Bohren durch den geometrischen Schwerpunkt des eines Rohedelsteins, **dadurch gekennzeichnet, dass** das erfasste Bild in der Bildverarbeitungssoftware gefiltert wird, wobei das Filtern Glätten des Bildes, um Bildrauschen zu reduzieren und Übergänge zu schärfen, indem Pixelwerte innerhalb einer lokalen Umgebung gemittelt werden, und Extrahieren von Farbkomponenten, umfassend Extraktion und Analyse von einzelnen Farbkomponenten, die in dem Bild vorhanden sind, und Umwandeln des Bildes in Graustufen umfasst;

das Feld der Videokamera (4) durch Spezifizieren von Koordinaten einer Region von Interesse (ROI) in dem erfassten Bild entsprechend dem bezeichneten Arbeitsbereich (3), in dem der Edelstein (2) zum Bearbeiten platziert ist, definiert ist;
das Bild durch Durchführen von Otsu-Binarisierungsvorgängen segmentiert wird, umfassend Berechnen eines Histogramms des erlangten Graustufenbildes, Normalisieren des Histogramms, Berechnen von Klassenwahrscheinlichkeiten und Mittelwerten für unterschiedlichen Schwellenwerte, Berechnen von Intraklassen- und Interklassenvarianzen, Auswählen eines Schwellenwertes, der Interklassenvarianz maximiert, Anwenden des ausgewählten Schwellenwertes, um ein binäres Bild zu erzeugen, wobei die Binarisierungsvorgänge automatisch einen optimalen Schwellenwert zum Trennen von der Oberfläche der Bohrzone (3) bestimmen, wobei Edelsteine (2), die in dem Arbeitsbereich (ROI) platziert sind, durch weiße Pixel (Wert 1) dargestellt sind, während der Hintergrund durch schwarze Pixel (Wert 0) in dem resultierenden binären Bild dargestellt ist;
der Bereich des binären Bildes, der den Edelstein (2) darstellt, weiteren Bearbeitungsschritten unterzogen wird, umfassend Konturendetektion und Kantenverbesserung;
die Koordinaten (Xc, Yc) des geometrischen Schwerpunkts des Edelsteins (2) innerhalb des binären Bildes unter Verwendung einer Schwerpunktfunktion berechnet werden:

$$Xc=Sum(X*Pixel\ Value)/Sum(Pixel\ Value),\ Yc=Sum(Y*Pixel\ Value)/Sum(Pixel\ Value)\ [1]$$ wobei X und Y Pixelkoordinaten darstellen und Pixel Value ein numerischer binärer Wert, der 0 oder 1 beträgt, von jedem Pixel ist, wobei 0 ein schwarzes Pixel darstellt und 1 ein weißes Pixel darstellt,
Umwandeln der Koordinaten des geometrischen Schwerpunkts (Xc, Yc) des unregelmäßig geformten Edelsteins in das Koordinatensystem der CNC-Steuerung,

wobei die Koordinatenumwandlung des geometrischen Schwerpunkts (Xc, Yc) Verzerrungskorrektur, perspektivische Projektion, Rotation und Verschiebung, Skalierung und Versatz umfasst;
Positionieren des Bohrers (1) unter Verwendung von G-Code-Befehlen durchgeführt wird, die jeweils unter Verwendung der neu berechneten Koordinaten des geometrischen Schwerpunkts des Edelsteins und Bilden von Textzeichenfolgen von G-Code-Befehlen und Senden der G-Code-Befehle an Bohreinheiten generiert werden.

**Revendications**

1. Procédé de positionnement d'un trépan pour forer à travers un centroïde géométrique d'une pierre précieuse brute de forme irrégulière et à teintes multiples comprend la capture d'une image d'une zone de forage avec une pierre précieuse positionnée dans celle-ci en utilisant une caméra vidéo, le traitement de l'image capturée par un logiciel de traitement d'image s'exécutant dans l'unité de traitement d'image, l'obtention de coordonnées de la pierre précieuse dans l'image traitée et l'utilisation des coordonnées obtenues par un contrôleur de commande numérique pour commander le trépan pour forer à travers le centroïde géométrique de la pierre précieuse brute **caractérisé en ce que** l'image capturée est filtrée dans le logiciel de traitement d'image, où le filtrage comprend le lissage de l'image pour réduire le bruit d'image et affûter les transitions en faisant la moyenne des valeurs de pixels au sein d'un voisinage local, et l'extraction de composantes de couleur comprenant l'extraction et l'analyse de composantes de couleur individuelles présentes dans l'image, et la conversion de l'image en niveaux de gris ;

   le champ de la caméra vidéo (4) est défini en spécifiant des coordonnées de région d'intérêt (ROI) dans l'image capturée, correspondant à la zone de travail désignée (3) où la pierre précieuse (2) est placée pour le traitement ;
   l'image est segmentée en réalisant des opérations de binarisation d'Otsu comprenant le calcul de l'histogramme de l'image en niveaux de gris obtenue, la normalisation de l'histogramme, le calcul des probabilités de classe et des moyennes pour différentes valeurs de seuil, le calcul des variances intraclasses et interclasses, la sélection du seuil qui maximise la variance interclasse, l'application du seuil sélectionné pour créer une image binaire, où les opérations de binarisation déterminent automatiquement une valeur de seuil optimale pour séparer de la surface de la zone de forage (3), où les pierres précieuses (2) placées dans la zone de travail (ROI) sont représentées par des pixels blancs (valeur 1), tandis que l'arrière-plan est représenté par des pixels noirs (valeur 0) dans l'image binaire résultante ;
   la zone d'image binaire représentant la pierre précieuse (2) est soumise à des étapes de traitement ultérieures comprenant la détection de contour et l'accentuation de bord ;
   les coordonnées de centroïde géométrique (Xc, Yc) de la pierre précieuse (2) au sein de l'image binaire sont calculées en utilisant une fonction de centroïde :

   Xc=Sum(X*Pixel Value)/Sum(Pixel Value), Yc=Sum(Y*Pixel Value)/Sum(Pixel Value) [1] où X et Y représentent des coordonnées de pixel, et Pixel Value est une valeur binaire numérique, qui est 0 ou 1, de chaque pixel, où 0 représente un pixel noir et 1 représente un pixel blanc,
   la transformation des coordonnées du centroïde géométrique (Xc, Yc) de la pierre précieuse de forme irrégulière dans le système de coordonnées du contrôleur CNC,

   dans lequel la transformation de coordonnées de centroïde géométrique (Xc, Yc) comprend une correction de distorsion, une projection perspective, une rotation et une translation, une mise à l'échelle et un décalage ;
   le positionnement du trépan (1) est réalisé en utilisant des commandes de code G, qui sont respectivement générées en utilisant les coordonnées recalculées du centroïde géométrique de la pierre précieuse et en formant des chaînes de texte de commandes de code G et en envoyant les commandes de code G à l'unité de forage.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4076007 A
- CN 113210895 A

- DE 10157958

**Non-patent literature cited in the description**

- **GAHRAMANOVA, AMINA**. Locating Centers of Mass with Image Processing. *Undergraduate Journal of Mathematical Modeling: One + Two*, 2019, vol. 10
- **AMINA GAHRAMANOVA**. Locating Centers of Mass with the Image Processing. *Undergraduate Journal of Mathematical Modeling: One+Two*, May 2019, vol. 10 (1)
- **MCMANUS, IAN** ; **STÖVER, KATHARINA** ; **KIM, DO.** Arnheim's Gestalt Theory of Visual Balance: Examining the Compositional Structure of Art Photographs and Abstract Images. *i-Perception*, 2011

- **SINKEVICIUS, S.** ; **LIPNICKAS, A.** ; **RIMKUS, K.** Automatic Amber Gemstones Identification by Color and Shape Visual Properties. *Eng. Appl. Artif. Intell.*, 2015, vol. 37, 258-267
- **SINKEVICIUS, S** ; **LIPNICKAS, A.** ; **RIMKUS, K.** Amber Gemstones Sorting By Colour. *Elektron. Ir Elektrotechnika*, 2017, vol. 23, 10-14
- Target Recognition and Automatic Drilling Control for A Tunnel Drilling Robot''. **LU et al.** 2024 42nd Chinese Control Conference (CCC), Technical Committee on Control Theory. Chinese Association of Automation, 24 July 2023, 1-6